# EUROPEAN PATENT APPLICATION

(11) **EP 4 518 472 A1**
(43) Date of publication of application: **05.03.2025**
(21) Application number: 23795430.0
(22) Date of filing: 25.04.2023
(51) Int. Cl.: H04W 72/02

(54) **METHOD OF SELECTING RESOURCE ON SIDELINK (SL), AND TERMINAL**

(30) Priority: 28.04.2022 CN 202210462961
(71) Applicant: Vivo Mobile Communication Co., Ltd., Dongguan, Guangdong 523863 (CN)
(72) Inventor: PENG, Shuyan, Dongguan, Guangdong 523863 (CN); WANG, Yuanyuan, Dongguan, Guangdong 523863 (CN); SI, Ye, Dongguan, Guangdong 523863 (CN)
(74) Representative: Cabinet Beaumont
(86) International application number: PCT/CN2023/090680
(87) International publication number: WO 2023/207998

(57) **Abstract**

This application discloses a method for resource selection on sidelink SL, and a terminal, pertaining to the field of communication technologies. The method for resource selection on sidelink SL in embodiments of this application includes: performing, by a terminal, sensing on a sensing resource; based on a sensing result, performing resource exclusion in a resource selection window at a first resource granularity; and performing resource selection in remaining resources of the resource selection window at a second resource granularity, where a selected resource is used for transmitting an SL positioning reference signal PRS.

## Description

### CROSS-REFERENCE TO RELATED APPLICATIONS

The present invention claims priority to Chinese Patent Application No. 202210462961.9, filed with the China National Intellectual Property Administration on April 28, 2022 and entitled "METHOD FOR RESOURCE SELECTION ON SIDELINK SL, AND TERMINAL", which is incorporated herein by reference in its entirety.

### TECHNICAL FIELD

This application pertains to the field of communication technologies, and specifically relates to a method for resource selection on sidelink SL, and a terminal.

### BACKGROUND

Sidelink (sidelink, SL) is usually a communication link between terminals, also referred to as side-link, direct link, sidelink, side link, or the like, and is used for direct data transmission between terminals without passing through a network-side device. In the sidelink transmission, when having a positioning requirement, the terminal may transmit an SL positioning reference signal (Positioning Reference Signal, PRS) and use the SL PRS to perform positioning of the terminal.

During SL PRS transmission, an SL PRS transmission resource usually needs to be selected on SL. During selection of SL PRS transmission resource, considering that a larger available resource bandwidth for the SL PRS indicates better positioning accuracy. In addition, compatibility of the SL PRS with SL channels/signals in Release 16 (Rel 16)/Release 17 (Rel 17) standards also needs to be considered. Therefore, a solution needs to be provided to implement the purpose of selecting the SL PRS transmission resource on the SL.

### SUMMARY

Embodiments of this application provide a method for resource selection on sidelink SL, and a terminal, which can resolve the problem of how to select SL PRS transmission resources on SL.

According to a first aspect, a method for resource selection on sidelink SL is provided, and the method includes:
performing, by a terminal, sensing on a sensing resource;
based on a sensing result, performing resource exclusion in a resource selection window at a first resource granularity; and
performing resource selection in remaining resources of the resource selection window at a second resource granularity, where a selected resource is used for transmitting an SL positioning reference signal PRS.

According to a second aspect, an apparatus for resource selection on sidelink SL is provided, and the apparatus includes:
a sensing module, configured to perform sensing on a sensing resource;
a resource exclusion module, configured to: based on a sensing result, perform resource exclusion in a resource selection window at a first resource granularity; and
a resource selection module, configured to perform resource selection in remaining resources of the resource selection window at a second resource granularity, where a selected resource is used for transmitting an SL positioning reference signal PRS.

According to a third aspect, a terminal is provided, where the terminal includes a processor and a memory, and a program or instructions capable of running on the processor are stored in the memory. When the program or the instructions are executed by the processor, the steps of the method according to the first aspect are implemented.

According to a fourth aspect, a terminal is provided, including a processor and a communication interface. The processor is configured to perform sensing on a sensing resource; based on a sensing result, perform resource exclusion in a resource selection window at a first resource granularity; and perform resource selection in remaining resources of the resource selection window at a second resource granularity, where a selected resource is used for transmitting an SL positioning reference signal PRS.

According to a fifth aspect, a readable storage medium is provided, where a program or instructions are stored in the readable storage medium, and when the program or the instructions are executed by a processor, the steps of the method according to the first aspect are implemented.

According to a sixth aspect, a chip is provided, where the chip includes a processor and a communication interface, the communication interface is coupled to the processor, and the processor is configured to run a program or instructions to implement the method according to the first aspect.

According to a seventh aspect, a computer program/program product is provided, where the computer program/program product is stored in a non-transitory storage medium, and the computer program/program product is executed by at least one processor to implement the steps of the method for resource selection on sidelink SL according to the first aspect.

In the embodiments of this application, when the terminal selects the SL PRS transmission resource on the SL, because resource sensing can be performed first, unavailable resources can be excluded at the first resource granularity based on the sensing result, and then resource selection is performed at the second resource granularity in the remaining available resources, reliable resources for transmitting the SL PRS can be selected on the SL, thus ensuring effectiveness and reliability of SL PRS transmission.

### BRIEF DESCRIPTION OF DRAWINGS

FIG. 1 is a schematic diagram of a wireless communication system according to an embodiment of this application;
FIG. 2 is a schematic flowchart of a method for resource selection on sidelink SL according to an embodiment of this application;
FIG. 3 is a schematic flowchart of a method for resource selection on sidelink SL according to an embodiment of this application;
FIG. 4 is a schematic flowchart of a method for resource selection on sidelink SL according to an embodiment of this application;
FIG. 5 is a schematic flowchart of a method for resource selection on sidelink SL according to an embodiment of this application;
FIG. 6 is a schematic flowchart of a method for resource selection on sidelink SL according to an embodiment of this application;
FIG. 7 is a schematic flowchart of a method for resource selection on sidelink SL according to an embodiment of this application;
FIG. 8 is a schematic structural flowchart of an apparatus for resource selection on sidelink SL according to an embodiment of this application;
FIG. 9 is a schematic structural diagram of a communication device according to an embodiment of this application; and
FIG. 10 is a schematic structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

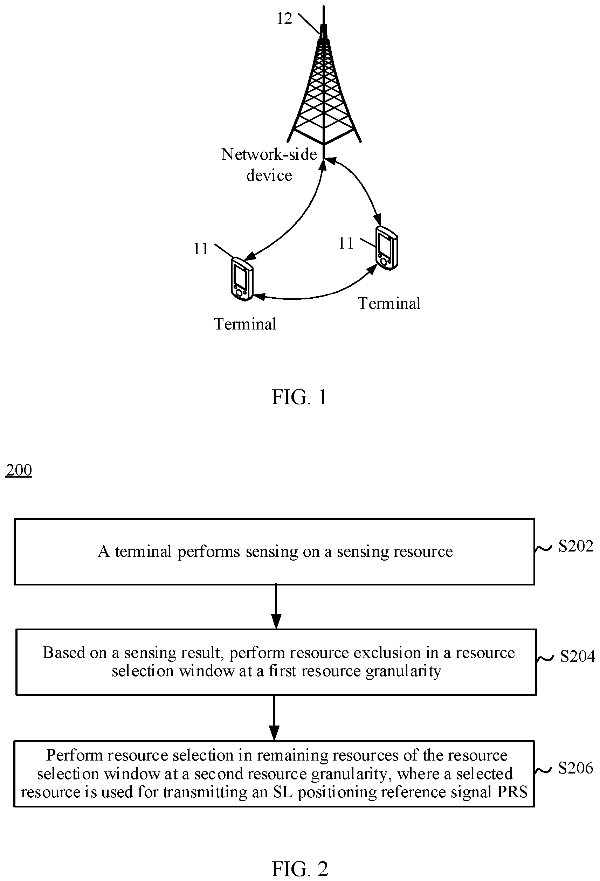

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

It should be noted that in the technical solution provided in the embodiments of this application, a resource for transmitting the SL PRS can be selected on the SL, where the SL PRS is a reference signal for SL positioning, and the reference signal for SL positioning may be a newly introduced reference signal or an extensible reference signal for positioning on the existing SL, for example, an SL synchronization signal and physical broadcast channel block (Synchronization Signal and PBCH block, SSB), an SL channel state information reference signal (Channel state information Reference Signal, CSI-RS), an SL phase tracking reference signal (Phase Tracking Reference Signal, PTRS), or an SL demodulation reference signal (Demodulation Reference Signal, DMRS), where the DMRS may include PSCCH DMRS or PSSCH DMRS. The embodiments of this application do not specifically limit the SL PRS.

The following describes in detail a method for resource selection on sidelink SL and a terminal provided in the embodiments of this application by using some embodiments and application scenarios thereof with reference to the accompanying drawings.

As shown in FIG. 2, an embodiment of this application provides a method 200 for resource selection on sidelink SL. The method for resource selection on sidelink SL can be executed by a terminal, in other words, the method for resource selection on sidelink SL can be executed by software or hardware installed in the terminal, and the method for resource selection on sidelink SL includes the following steps.

S202: The terminal performs sensing on a sensing resource.

During selection of an SL PRS transmission resource on SL, the terminal may perform sensing on the sensing resource.

The sensing resource (or sensing window) may be an SL resource received by the terminal within one time window and needing to be sensed. Optionally, in an embodiment, the sensing resource may be determined based on at least one of the following:
the sensing resource is determined based on a first time, where the first time may be a predefined parameter, a pre-configured parameter, or a configured parameter;
the sensing resource starts from a second time, where the second time is a difference between m and the first time; and
the sensing resource ends at m or at a third time, where the third time is a difference between m and a fourth time.

The first time is related to an SL PRS configuration period, which is specifically: the first time is a first value, and the first value is a maximum value of configured SL PRS periods, or the first time is a maximum value of the first value and Y slots; or the first time is a sum of the first value and Z milliseconds; and, or the first time is a sum of the first value and Y slots. Y and/or Z is a predefined, pre-configured, or configured value, Y is an integer greater than or equal to 1, and Z is an integer greater than or equal to 1.

m may be a time for performing resource selection by the terminal, or may be a start time of the resource selection window, or may be a fifth time before the start time of the resource selection window. The fourth time is a predefined time, and the fourth time may be Tproc. Tproc may be Tproc,0 or Tproc,1, or Tproc,0 + Tproc,1. Optionally, Tproc,0 and Tproc,1 are related to an SCS configuration. The fifth time is a predefined time, and the fifth time may be Tproc, Tproc may be Tproc,0 or Tproc,1, or Tproc,0 + Tproc,1. Optionally, Tproc,0 and Tproc,1 are related to an SCS configuration, and the fourth time and the fifth time may be the same or different.

In this embodiment, a start time and/or an end time of the sensing resource can be determined based on the foregoing at least one item met by the first time, so that the sensing resource can be determined.

It should be noted that the m, the first time, the second time, the third time, the fourth time and the fifth time may be a physical time (such as nanosecond (ns), microsecond (µs), millisecond (ms), or second (s)) or a logical time (slot (slot), symbol (symbol), subframe (subframe), or frame (frame)), and may be specifically determined based on an actual application scenario, which is not specifically limited here. In different scenarios, the physical time and logical time may be converted to each other. In addition, the m, the first time, the second time, the third time, the fourth time, and the fifth time may include a time point and/or a time length, and may be specifically determined based on an actual application scenario, for example, the first time may be a time length, the second time may be a time point, the fourth time and the fifth time may be a time length, and so on.

In this embodiment of this application, when performing sensing on the sensing resource, the terminal may perform sensing on a physical sidelink control channel (Physical Sidelink Control Channel, PSCCH) and perform measurement on reference signal received power (Reference Signal Received Power, RSRP) of an SL physical sidelink shared channel (Physical Sidelink Shared Channel, PSSCH) and/or PSCCH and/or PRS.

Optionally, in an embodiment, the terminal performing sensing on the sensing resource may meet at least one of the following:
a sensing reference signal is determined based on a predefined, pre-configured or configured reference signal parameter; optionally, the sensing reference signal may be an SL PRS (applicable to an SL PRS dedicated resource) or may be a PSCCH demodulation reference signal (DeModulation Reference Signal, DMRS);
SL PRS sensing is determined based on a quantity of ports and/or a port number of the SL PRS; and
an SL PRS sensing result is the same as an SL PSCCH, SL PSSCH, and/or SL DMRS sensing result, or the SL PSSCH, SL PSSCH, and/or SL DMRS sensing result is the SL PRS sensing result, for example, in a case that an RSRP of the SL PRS can be indicated by SL PSSCH RSRP, SL PSCCH RSRP, and/or SL DMRS RSRP, it may be considered that the SL PRS sensing result is the same as the SL PSCCH, SL PSSCH, and/or SL DMRS sensing result, or it may be considered that the SL PSSCH, SL PSSCH, and/or SL DMRS sensing result is the SL PRS sensing result.

S204: Based on a sensing result, perform resource exclusion in a resource selection window at a first resource granularity.

S206: Perform resource selection in remaining resources of the resource selection window at a second resource granularity, where a selected resource is used for transmitting an SL positioning reference signal PRS.

After performing sensing on the sensing resource, the terminal may perform resource exclusion in the resource selection window (or a candidate resource set) based on the sensing result, so as to exclude unavailable resources; and then in the remaining resources in the resource selection window, may select a resource for transmitting an SL PRS.

During resource exclusion in the resource selection window, resource exclusion may be performed at the first resource granularity; during resource selection in the remaining resources in the resource selection window, resource selection may be performed at the second resource granularity, so as to obtain an SL PRS transmission resource on SL. The unavailable resources are resources occupied by other terminals (User Equipment, UE) for transmitting information, and/or resources for data transmission of the terminal (which may be resources occupied by transmitting other transport block (Transport Block, TB) or other processes), and/or resources required by the terminal for re-evaluation/preemption mechanism sensing.

Optionally, in an embodiment, the first resource granularity may be the same as or different from the second resource granularity. In a same case, only one resource granularity may be configured. In different cases, optionally, the first resource granularity may be larger than the second resource granularity, that is, during resource exclusion and resource selection, resource exclusion may be performed based on a larger resource granularity, and resource selection may be performed based on a smaller resource granularity.

Optionally, in an embodiment, the first resource granularity may include at least one of the following:
the first resource granularity is a predefined, pre-configured, or configured parameter;
the first resource granularity is determined according to a predefined, pre-configured, or configured rule;
the first resource granularity is related to an SL PRS configuration;
the first resource granularity is related to an SL positioning method; and
the first resource granularity is related to an SL physical sidelink feedback channel (Physical Sidelink Feedback Channel, PSFCH) configuration.

In this embodiment, for the first resource granularity in any one of the above, optionally, the first resource granularity may specifically include at least one of the following:
an SL PRS pattern (pattern);
M time domain resource elements, where the time domain resource element may include a symbol (symbol(s)), a slot (slot(s)), a microsecond µs, a millisecond ms, or a second s;
N frequency domain resource elements, where the frequency domain resource element includes a comb (comb) unit, a resource block (Resource Block, RB(s)), a resource element (Resource element, RE(s)), or a subchannel;
a frequency domain bandwidth of a resource pool (resource pool);
a frequency domain bandwidth of a bandwidth part (Bandwidth Part, BWP); and
a frequency domain bandwidth of a carrier (carrier).

That is, when the terminal performs resource exclusion in the resource selection window at the first resource granularity, the first resource granularity may be at least one of an SL PRS pattern, M time domain resource elements, N frequency domain resource elements, a frequency domain bandwidth of a resource pool, a frequency domain bandwidth of a BWP, and a frequency domain bandwidth of a carrier (carrier). Any one of the SL PRS pattern, M time domain resource elements, N frequency domain resource elements, the frequency domain bandwidth of the resource pool, the frequency domain bandwidth of the BWP, and the frequency domain bandwidth of the carrier may be a predefined, pre-configured, or configured parameter, or be determined according to a predefined, pre-configured, or configured rule, or be related to an SL PRS configuration, or be related to an SL positioning method, or related to an SL PSFCH configuration. M is an integer greater than or equal to 1, and N is an integer greater than or equal to 1.

Optionally, in an embodiment, the first resource granularity being related to the SL PRS configuration specifically includes any one of the following:
in a case that the SL PRS configuration is A symbols, the first resource granularity is equal to the A symbols, where A is an integer greater than or equal to 1;
in a case that the terminal transmits an SL PRS, the first resource granularity is equal to one or multiple slot(s); and
in a case that SL PRS transmission is supported in a resource pool or BWP or carrier or frequency domain range, the first resource granularity is equal to one or multiple slot(s).

The first resource granularity here may specifically be the M time domain resource elements. The M time domain resource elements being related to the SL PRS configuration may specifically be: in a case that the SL PRS configuration is A symbols, the M time domain resource elements are equal to the A symbols; in a case that the terminal transmits an SL PRS, the M time domain resource elements are equal to one or multiple slot(s); where for example, if the SL PRS occupies 2 symbols and resource exclusion based on a slot level is defined, a resource in a slot in which the SL PRS is located may be excluded during resource exclusion performed at the first resource granularity; or, in a case that SL PRS transmission is supported in a resource pool, the M time domain resource elements are equal to one or multiple slot(s).

Optionally, in an embodiment, the first resource granularity being related to the SL positioning method may include:
in a case that the SL positioning method is configured as a first positioning method, the first resource granularity is M1 time domain resource elements, or the first resource granularity is pattern1 pattern units, or the first resource granularity is N1 frequency domain resource elements; where M1, pattern1, and N1 are integers greater than or equal to 1, and M1, pattern 1, and N1 are predefined, pre-configured or configured parameters, or are determined according to a predefined, pre-configured or configured rule, or are related to an SL PRS configuration, or are related to an SL positioning method, or are related to an SL PSFCH configuration.

The first positioning method may include at least one of a round-trip time (Round Trip Time, RTT) positioning method, a multi-RTT (multiple RTT) positioning method, a time difference of arrival (Time Difference Of Arrival, TDOA) positioning method, and an angle positioning method.

In a case that the first resource granularity is M time domain resource elements and M is M1, in resources to be selected at the second resource granularity, the [n*(M1/x)+1]-th to [(n+1)*(M1/x)]-th resources are resources of the terminal or other terminals, where n is greater than or equal to 0 and less than or equal to x; or in a case that the first resource granularity is N frequency domain resource elements and N is N1, in resources to be selected at the second resource granularity, the [n*(N1/x)+1]-th to [(n+1)*(N1/x)]-th resources are resources of the terminal or other terminals, where n is greater than or equal to 0 and less than or equal to x; or in a case that the first resource granularity is pattern and the pattern is pattern1, in resources to be selected at the second resource granularity, the [n*(pattern1/x)+1]-th to [(n+1)*(pattern1/x)]-th resources are resources of the terminal or other terminals, where n is greater than or equal to 0 and less than or equal to x. That is, in a case that the first resource granularity is M1 time domain resource elements or N1 frequency domain resource elements, or pattern1 pattern units, after the resource exclusion in the resource selection window at the first resource granularity, and during resource selection in remaining resources at the second resource granularity, not only an SL PRS transmission resource of the terminal can be selected, but also SL PRS transmission resources of other terminals (which are terminals for positioning along with the terminal by using the first positioning method) can be selected. In addition, in selected resources, resources between the terminal and other terminals are adjacently spaced apart.

For example, if the resources selected at the second resource granularity are resource 1 and resource 2, resource 1 may be allocated to UE 1, resource 2 may be allocated to UE 2, or resource 1 may be allocated to UE 2 and resource 2 may be allocated to UE 1. For another example, if the resources selected at the second resource granularity are resource 1, resource 2, resource 3, and resource 4, resource 1 and resource 3 may be allocated to UE 1, resource 2 and resource 4 are allocated to UE 2; or resource 1 and resource 3 may be allocated to UE 2, resource 2 and resource 4 are allocated to UE 1. Certainly, if the number of other terminals is multiple, the selected resources may be allocated to the terminal and the other multiple terminals in the same way, and no examples will be given here.

In SL positioning, in a case that the positioning method includes an RTT positioning method, a closer distance between SL PRS transmission resources of TX UE and RX UE indicates a smaller positioning error caused by a clock difference. Therefore, in this embodiment, the [n*(M1/x)+1]-th to [(n+1)*(M1/x)]-th resources in the selected SL PRS resources are allocated to the terminal or other terminals; or the [n*(N1/x)+1]-th to [(n+1)*(N1/x)]-th resources in the selected SL PRS resources are allocated to the terminal or other terminals; or the [n*(pattern1/x)+1]-th to [(n+1)*(pattern1/x)]-th resources in the selected SL PRS resources are allocated to the terminal or other terminals. This can improve positioning accuracy and reduce positioning errors.

Optionally, the first resource granularity being related to the SL PSFCH configuration may include:
in a case that the SL PSFCH is configured in a slot, the first resource granularity is equal to 2 or 4 symbols; and
in a case that no SL PSFCH is configured in the slot, the first resource granularity is equal to 0.

The first resource granularity here may specifically be the M time domain resource elements. The M time domain resource elements being related to the SL PSFCH configuration may specifically be: in a case that the SL PSFCH is configured in a slot, the M time domain resource elements are equal to 2 or 4 symbols; where in this case, optionally, when resource exclusion is performed at the first resource granularity, the excluded resources may be located in symbol 11 and symbol 12 (corresponding to a case that the first resource granularity is equal to 2 symbols), or in symbol 10, symbol 11, symbol 12, and symbol 13 (corresponding to a case that the first resource granularity is equal to 4 symbols); or in a case that no SL PSFCH is configured in the slot, the M time domain resource elements are equal to 0, indicating no SL PRS transmission in the slot and no resource exclusion.

After performing resource exclusion in the resource selection window at the first resource granularity, the terminal can perform resource selection in the remaining resources of the resource selection window at the second resource granularity. During resource selection at the second resource granularity, optionally, in an embodiment, the second resource granularity may include at least one of the following:
the second resource granularity is a predefined, pre-configured, or configured parameter;
the second resource granularity is determined according to a predefined, pre-configured, or configured rule;
the second resource granularity is related to an SL PRS configuration; and
the second resource granularity is related to an SL positioning method.

In this embodiment, for the second resource granularity in any one of the above, optionally, the second resource granularity may specifically include at least one of the following:
an SL PRS pattern;
P time domain resource elements, where the time domain resource element includes a symbol, a slot, a microsecond, a millisecond, or a second;
Q frequency domain resource elements, where the frequency domain resource element includes a comb unit, an RB(s), a RE(s), or a subchannel;
a frequency domain bandwidth of a resource pool;
a frequency domain bandwidth of a BWP; and
a frequency domain bandwidth of a carrier (carrier).

That is, when the terminal performs resource selection in the remaining resources of the resource selection window at the second resource granularity, the second resource granularity may be at least one of an SL PRS pattern, P time domain resource elements, Q frequency domain resource elements, a frequency domain bandwidth of a resource pool, a frequency domain bandwidth of a BWP, and a frequency domain bandwidth of a carrier. Any one of the SL PRS pattern, P time domain resource elements, Q frequency domain resource elements, the frequency domain bandwidth of the resource pool, the frequency domain bandwidth of the BWP, and the frequency domain bandwidth of the carrier may be a predefined, pre-configured, or configured parameter, or be determined according to a predefined, pre-configured, or configured rule, or be related to an SL PRS configuration, or be related to an SL positioning method. P is an integer greater than or equal to 1, and Q is an integer greater than or equal to 1.

Optionally, in an embodiment, the second resource granularity being related to the SL PRS configuration may specifically include:
in a case that the SL PRS configuration is B symbols, the second resource granularity is equal to the B symbols.

The second resource granularity here may specifically be the P time domain resource elements. The P time domain resource elements being related to the SL PRS configuration may specifically be: in a case that the SL PRS configuration is B symbols, the P time domain resource elements are equal to B symbols.

Optionally, in an embodiment, the second resource granularity being related to the SL positioning method may include:
in a case that the SL positioning method is configured as a second positioning method, the second resource granularity is M2 time domain resource elements, or the second resource granularity is pattern2 pattern units, or the second resource granularity is N2 frequency domain resource elements; where M2, pattern2, and N2 are integers greater than or equal to 1, and M2, pattern2, and N2 are predefined, pre-configured or configured parameters, or are determined according to a predefined, pre-configured or configured rule, or are related to an SL PRS configuration, or are related to an SL positioning method.

The second positioning method may include at least one of an RTT positioning method, a multi-RTT positioning method, a TDOA positioning method, and an angle positioning method.

In a case that the second resource granularity is P time domain resource elements and P is M2, in resources to be selected at the second resource granularity, the [n*(M2/x)+1]-th to [(n+1)*(M2/x)]-th resources are resources of the terminal or other terminals, where n is greater than or equal to 0 and less than or equal to x; or in a case that the second resource granularity is Q frequency domain resource elements and Q is N2, in resources to be selected at the second resource granularity, the [n*(N2/x)+1]-th to [(n+1)*(N2/x)]-th resources are resources of the terminal or other terminals, where n is greater than or equal to 0 and less than or equal to x; or in a case that the second resource granularity is pattern and the pattern is pattern2, in resources to be selected at the second resource granularity, the [n*(pattern2/x)+1]-th to [(n+1)*(pattern2/x)]-th resources are resources of the terminal or other terminals, where n is greater than or equal to 0 and less than or equal to x. That is, in a case that the second resource granularity is M2 time domain resource elements or N2 frequency domain resource elements, or pattern2 pattern units, after the resource exclusion in the resource selection window at the first resource granularity, and during resource selection in remaining resources at the second resource granularity, not only an SL PRS transmission resource of the terminal can be selected, but also SL PRS transmission resources of other terminals (which are terminals for positioning along with the terminal by using the first positioning method) can be selected. In addition, in selected resources, resources between the terminal and other terminals are adjacently spaced apart. Then, in a case that the positioning method includes an RTT positioning method, this can improve positioning accuracy and reduce positioning errors.

In this embodiment of this application, in a case that the terminal performs resource exclusion in the resource selection window at the first resource granularity and performs resource selection in the remaining resources of the resource selection window at the second resource granularity, optionally, the first resource granularity and/or the second resource granularity may be related to the SL PRS configuration, and the SL PRS configuration may include at least one of the following:
a resource pool or BWP or carrier or frequency domain range configuration of the SL PRS; and
data multiplexed with the SL PRS.

In a case that the first resource granularity and/or the second resource granularity are related to the resource pool configuration of the SL PRS:
if the resource pool of the SL PRS is configured as a dedicated resource pool (dedicated resource pool), or if the SL PRS is to be transmitted in a dedicated resource pool, the first resource granularity is a time domain resource size or time-frequency domain resource size of the SL PRS, and the second resource granularity is a time domain resource size or time-frequency domain resource size of the SL PRS; that is, during resource exclusion and resource selection, resource exclusion may be performed based on the time domain resource size (considering that the SL PRS occupies the entire frequency domain bandwidth) or time-frequency domain resource size of the SL PRS, and resource selection may be performed based on the time domain resource size or time-frequency domain resource size of the SL PRS; and
if the resource pool of the SL PRS is configured as being multiplexed with SL data, the first resource granularity is one or multiple slot(s), and the second resource granularity is a time domain resource size or time-frequency domain resource size of the SL PRS; that is, during resource exclusion and resource selection, resource exclusion may be performed at the slot level, and resource selection is performed based on the time domain resource or time-frequency domain resource of the SL PRS.

In a case that the first resource granularity and/or the second resource granularity is related to the data multiplexed with the SL PRS:
if the SL PRS is multiplexed with the PSCCH and/or PSSCH, the first resource granularity is one or multiple slot(s), and the second resource granularity is a time domain resource size or time-frequency domain resource size of the SL PRS; that is, during resource exclusion and resource selection, resource exclusion may be performed at the slot level, and resource selection is performed based on the time domain resource or time-frequency domain resource of the SL PRS; and
if the SL PRS is multiplexed with the PSFCH, the first resource granularity is one or multiple symbol(s), and the second resource granularity is a time domain resource size or time-frequency domain resource size of the SL PRS; that is, during resource exclusion and resource selection, resource exclusion may be performed at the symbol level, and resource selection is performed based on the time domain resource or time-frequency domain resource of the SL PRS.

It should be noted that, in this embodiment of this application, when the terminal performs resource selection on the SL (that is, when the terminal implements the whole process of S202 to S206), it can perform resource selection on the SL in a case that the first condition is met, that is, the terminal can enable the whole process of S202 to S206 in a case that the first condition is met. The first condition may include at least one of the following:
SL PRS transmission is configured or enabled in a BWP or carrier or frequency domain range;
SL PRS transmission is configured or enabled for a resource pool; and
SL PRS-based sensing is configured for the resource pool.

To facilitate understanding of the technical solution of resource selection on SL provided in the embodiments of this application, the following five embodiments may be used as examples for description.

First embodiment: resource exclusion (resource exclusion) is performed at a slot level/symbol level.

The terminal determines a slot in which the SL PRS is located according to an indication of downlink control information (Downlink Control Information, DCI) or sidelink control information (Sidelink Control Information, SCI), and the resource in the slot in which the SL PRS is located can be excluded during resource exclusion in the resource selection window; or the terminal determines a symbol in which the SL PRS is located according to an indication of DCI or SCI, the resource in the symbol and/or slot in which the SL PRS is located can be excluded during resource exclusion in the resource selection window.

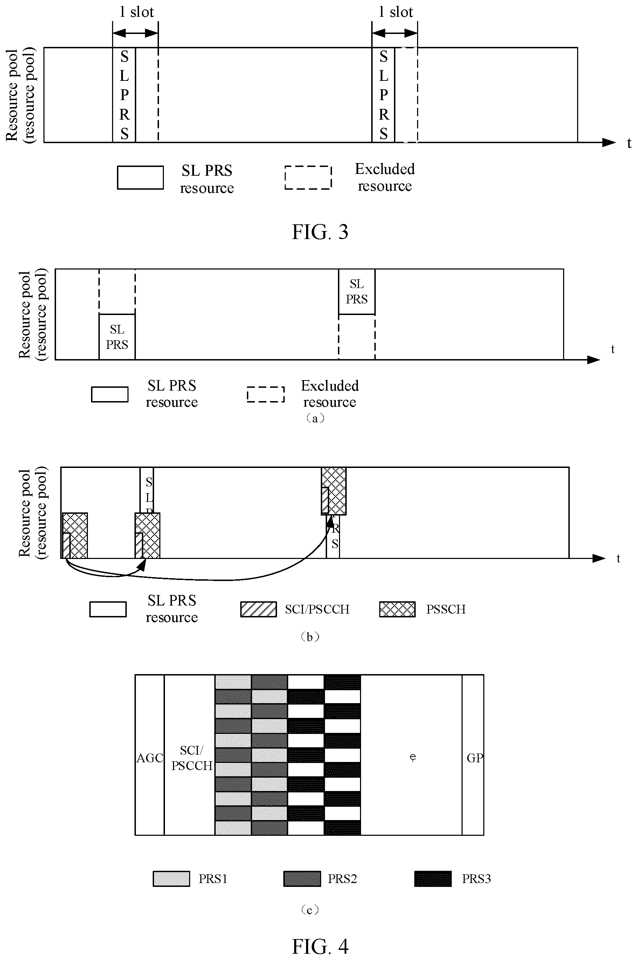

As shown in FIG. 3, the SL PRS occupies the frequency domain resource of the resource pool. According to the indication of DCI or SCI, the terminal determines that the symbol in which the SL PRS is located is the time domain resource corresponding to the SL PRS resource shown in FIG. 3. The resource in the symbol and/or slot in which the SL PRS is located can be excluded during resource exclusion, that is, a time domain resource corresponding to a dashed box (including the solid line box of the SL PRS resource) shown in FIG. 3. The DCI is signaling sent by the base station; SCI is an indication sent by the transmit UE and used for determining a resource selected by the receive UE; or an indication sent by a control terminal and used for determining a resource selected by the transmit terminal or the receive terminal; or the SCI is an indication sent by the receive UE and used to indicate a resource selected by the transmit UE.

Second embodiment: resource exclusion is performed based on different frequency domain resources.

Scenario 1: the SL PRS and/or SCI and/or PSSCH occupies part or all of the bandwidth of the resource pool/BWP/carrier.

The terminal determines a slot/symbol in which the SL PRS is located and a frequency domain resource of the SL PRS according to DCI/SCI indication information. The frequency domain resource of the SL PRS can be excluded during resource exclusion; and resource selection may be performed in remaining resources during resource selection. Alternatively, the terminal determines a slot/symbol in which the SL PRS is located according to the DCI/SCI indication information. During resource exclusion, the terminal may exclude a frequency domain resource of a resource pool/BWP/carrier range on a time domain resource in which the SL PRS is located, and performs resource selection in remaining resources during resource selection. As shown in FIG. 4(a), during resource exclusion, a frequency domain resource shown in a dashed box in FIG. 4(a) may be excluded, that is, a frequency domain resource corresponding to a solid line box of the SL PRS resource; or a time-frequency domain resources shown in a dashed box in FIG. 4 (a) may be excluded, that is, a time-frequency domain resource corresponding to a dashed box including the solid line box of the SL PRS resource.

Scenario 2: the terminal determines a time-frequency domain resource of the PSSCH and a time-domain resource of the SL PRS according to SCI, and excludes the slot of the SL PRS during resource exclusion, as shown in FIG. 4(b).

It should be noted that if indication information in a PSCCH carries a bandwidth of a PSSCH (such as SL positioning PSSCH), and for a slot carrying the SL PRS, the bandwidth of the SL PRS is preset or configured as a resource pool/BWP/carrier/frequency domain range, a bandwidth corresponding to the resource pool/BWP/carrier that is corresponding to time domain in which the PSSCH is located can be excluded during resource exclusion to avoid collision with the SL PRS.

Scenario 3: resource exclusion is performed at a granularity of SL PRS pattern.

The terminal determines a slot/symbol in which the SL PRS is located and an SL PRS pattern index according to the DCI/SCI indication information. The terminal may exclude, during resource exclusion, an SL PRS index corresponding to the time domain resource in which the SL PRS is located; and performs resource selection in remaining resources.

As shown in FIG. 4(c), if the terminal determines a slot/symbol in which the SL PRS is located and an SL PRS pattern index being PRS1 according to the DCI/SCI indication information, a resource in an area in which PRS1 is located can be excluded during resource exclusion and other resources may be reserved, such as resources in areas in which PRS2 and PRS3 are located.

Third embodiment: SL PRS dedicated resource (dedicated resource).

Scenario 1: the terminal performs resource selection on the SL, which may include the following steps:
step 1: the terminal performs PSCCH sensing and SL PRS RSRP measurement in the sensing resource or sensing window (or candidate resource set);
step 2: the terminal determines a priority P_RX_PRS of the SL PRS and a reserved time-frequency domain resource X of the SL PRS according to PSCCH sensing or a predefined or configured value;
step 3: the terminal determines an RSRP threshold such as RSRP threshold 1 according to a received P_RX and a priority P_TX of the SL PRS to be transmitted;
step 4: if the measured SL PRS RSRP is greater than RSRP threshold 1, a time-frequency domain resource X of the SL PRS reserved by the SCI is excluded; and
step 5: the terminal selects a resource from remaining resources of the resource selection window.

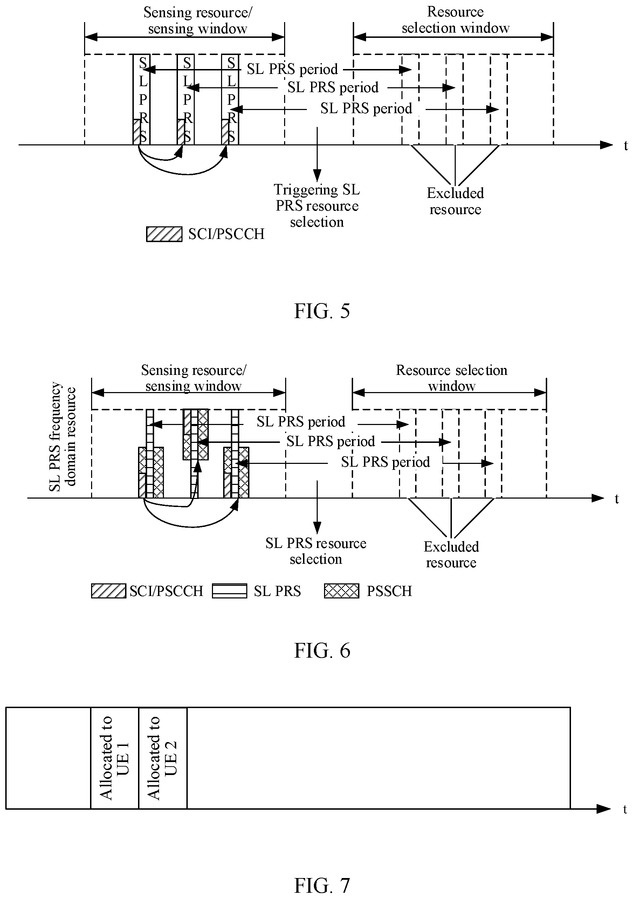

Exclusion and selection of resources may be shown in FIG. 5.

Scenario 2: the terminal performs resource selection on the SL, which may include the following steps:
step 1: the terminal performs PSCCH sensing and PSCCH DMRS RSRP measurement in the sensing resource or sensing window (or candidate resource set);
step 2: the terminal determines a priority P_RX_PRS of the SL PRS and a reserved time-frequency domain resource X of the SL PRS according to PSCCH sensing or a predefined or configured value;
step 3: the terminal determines an RSRP threshold, such as RSRP threshold 1, according to a received P_RX and a priority P_TX of the SL PRS to be transmitted;
step 4: if the measured PSCCH DMRS RSRP is greater than RSRP threshold 1, a time-frequency domain resource X of the SL PRS reserved by the SCI is excluded; and
step 5: the terminal selects a resource from remaining resources of the resource selection window.

Exclusion and selection of resources may also be shown in FIG. 5.

Fourth embodiment: a scenario in which the SL PRS and the PSSCH are multiplexed.

The terminal performs resource selection on the SL, which may include the following steps:
step 1: the terminal performs PSCCH sensing and SL PSSCH DMRS/PSCCH DMRS/PRS RSRP measurement in the sensing resource/sensing window;
step 2: the terminal determines a priority P_RX of the SL PRS/PSSCH and a reserved SL time-frequency domain resource X according to PSCCH sensing or a predefined or configured value;
step 3: the terminal determines an RSRP threshold, such as RSRP threshold 1, according to a received P_RX and a priority P_TX of the SL PRS/PSSCH to be transmitted;
step 4: if the measured SL PSSCH DMRS/PSCCH DMRS/PRS RSRP is greater than RSRP threshold 1, an SL time-frequency domain resource X reserved by the SCI is excluded; and
step 5: the terminal selects a resource from remaining resources of the resource selection window.

Exclusion and selection of resources may be shown in FIG. 6.

Fifth embodiment: 2 slots are used as the second resource granularity for resource selection.

If bilateral bidirectional positioning is configured for a BWP or resource pool or carrier or frequency domain range (for example, frequency range 1 or frequency range 2), resource selection may be performed based on a preset resource selection granularity. The selected resources may be continuous or discontinuous resources, and for discontinuous resources, it may be considered that resource selection in time domain is performed in a pattern form.

The terminal may allocate the 1st selected SL PRS resource to UE 1 (that is, an SL PRS transmission resource of the TX UE) and the 2nd SL PRS resource to UE 2 (that is, an SL PRS transmission resource of the RX UE), as shown in FIG. 7. Considering a clock error, a closer distance between SL PRS transmission resources of the TX UE and the RX UE indicates a higher positioning accuracy.

Sixth embodiment: 1 slot is used as the second resource granularity for resource selection.

If bilateral bidirectional positioning is configured for a BWP or resource pool or carrier or frequency domain range (for example, frequency range 1 or frequency range 2), resource selection may be performed based on a preset resource selection granularity. The selected resources are continuous resources. The number of continuous resources is a preset value or determined based on the number of terminals.

Two resources are selected by default, the 1st SL PRS resource selected by the terminal is a resource of UE 1 (which is the terminal or other terminals), and the 2nd SL PRS resource is a resource of UE 2. For details, refer to FIG. 7.

In this embodiment of this application, when the terminal selects the SL PRS transmission resource on the SL, because resource sensing can be performed first, unavailable resources can be excluded at the first resource granularity based on the sensing result, and then resource selection is performed at the second resource granularity in the remaining available resources, reliable resources for transmitting the SL PRS can be selected on the SL, thus ensuring effectiveness and reliability of SL PRS transmission.

For the method for resource selection on sidelink SL provided in the embodiments of this application, the execution body may be an apparatus for resource selection on sidelink SL. In the embodiments of this application, the method for resource selection on sidelink SL being performed by the apparatus for resource selection on sidelink SL is used as an example to describe the apparatus for resource selection on sidelink SL provided in the embodiments of this application.

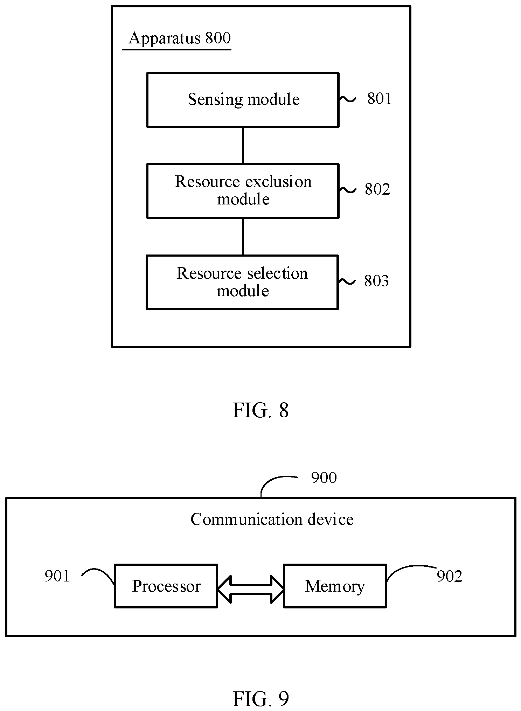

FIG. 8 is a schematic structural diagram of an apparatus for resource selection on sidelink SL according to an embodiment of this application. The apparatus may correspond to the terminal in other embodiments. As shown in FIG. 8, the apparatus 800 includes the following modules:
a sensing module 801, configured to perform sensing on a sensing resource;
a resource exclusion module 802, configured to: based on a sensing result, perform resource exclusion in a resource selection window at a first resource granularity; and
a resource selection module 803, configured to perform resource selection in remaining resources of the resource selection window at a second resource granularity, where a selected resource is used for transmitting an SL positioning reference signal PRS.

Optionally, in an embodiment, the first resource granularity is the same as or different from the second resource granularity.

Optionally, in an embodiment, the first resource granularity includes at least one of the following:
an SL PRS pattern (pattern);
M time domain resource elements, where the time domain resource element includes a symbol(s), a slot(s), a microsecond µs, a millisecond ms, or a second s;
N frequency domain resource elements, where the frequency domain resource element includes a comb (comb) unit, a resource block RB(s), a resource element RE(s), or a subchannel;
a frequency domain bandwidth of a resource pool;
a frequency domain bandwidth of a bandwidth part BWP; and
a frequency domain bandwidth of a carrier (carrier).

Optionally, in an embodiment, the first resource granularity includes at least one of the following:
the first resource granularity is a predefined, pre-configured, or configured parameter;
the first resource granularity is determined according to a predefined, pre-configured, or configured rule;
the first resource granularity is related to an SL PRS configuration;
the first resource granularity is related to an SL positioning method; and
the first resource granularity is related to an SL physical sidelink feedback channel PSFCH configuration.

Optionally, in an embodiment, the first resource granularity being related to the SL PRS configuration includes any one of the following:
in a case that the SL PRS configuration is A symbols, the first resource granularity is equal to the A symbols;
in a case that the terminal transmits an SL PRS, the first resource granularity is equal to one or multiple slot(s); and
in a case that SL PRS transmission is supported in a resource pool or BWP or carrier or frequency domain range, the first resource granularity is equal to one or multiple slot(s).

Optionally, in an embodiment, the first resource granularity being related to the SL PSFCH configuration includes:
in a case that the SL PSFCH is configured in a slot, the first resource granularity is equal to 2 or 4 symbols; and
in a case that no SL PSFCH is configured in the slot, the first resource granularity is equal to 0.

Optionally, in an embodiment, the first resource granularity being related to the SL positioning method includes:
in a case that the SL positioning method is configured as a first positioning method, the first resource granularity is M1 time domain resource elements, or the first resource granularity is pattern1 pattern units, or the first resource granularity is N1 frequency domain resource elements; where
in a case that the first resource granularity is M time domain resource elements and M is M1, in resources to be selected at the second resource granularity, the [n*(M1/x)+1]-th to [(n+1)*(M1/x)]-th resources are resources of the terminal or other terminals, where n is greater than or equal to 0 and less than or equal to x; or
in a case that the first resource granularity is N frequency domain resource elements and N is N1, in resources to be selected at the second resource granularity, the [n*(N1/x)+1]-th to [(n+1)*(N1/x)]-th resources are resources of the terminal or other terminals, where n is greater than or equal to 0 and less than or equal to x; or
in a case that the first resource granularity is pattern and the pattern is pattern1, in resources to be selected at the second resource granularity, the [n*(pattern1/x)+1]-th to [(n+1)*(pattern1/x)]-th resources are resources of the terminal or other terminals, where n is greater than or equal to 0 and less than or equal to x; where
the first positioning method includes at least one of a round-trip time RTT positioning method, a multi-RTT positioning method, a time difference of arrival TDOA positioning method, and an angle positioning method.

Optionally, in an embodiment, the second resource granularity includes at least one of the following:
an SL PRS pattern;
P time domain resource elements, where the time domain resource element includes a symbol, a slot, a microsecond, a millisecond, or a second;
Q frequency domain resource elements, where the frequency domain resource element includes a comb unit, an RB(s), a RE(s), or a subchannel;
a frequency domain bandwidth of a resource pool;
a frequency domain bandwidth of a BWP; and
a frequency domain bandwidth of a carrier (carrier).

Optionally, in an embodiment, the second resource granularity includes at least one of the following:
the second resource granularity is a predefined, pre-configured, or configured parameter;
the second resource granularity is determined according to a predefined, pre-configured, or configured rule;
the second resource granularity is related to an SL PRS configuration; and
the second resource granularity is related to an SL positioning method.

Optionally, in an embodiment, the second resource granularity being related to the SL PRS configuration includes:
in a case that the SL PRS configuration is B symbols, the second resource granularity is equal to the B symbols.

Optionally, as an embodiment, the second resource granularity being related to the SL positioning method includes:
in a case that the SL positioning method is configured as a second positioning method, the second resource granularity is M2 time domain resource elements, or the second resource granularity is pattern2 pattern units, or the second resource granularity is N2 frequency domain resource elements; where
in a case that the second resource granularity is P time domain resource elements and P is M2, in resources to be selected at the second resource granularity, the [n*(M2/x)+1]-th to [(n+1)*(M2/x)]-th resources are resources of the terminal or other terminals, where n is greater than or equal to 0 and less than or equal to x; or
in a case that the second resource granularity is Q frequency domain resource elements and Q is N2, in resources to be selected at the second resource granularity, the [n*(N2/x)+1]-th to [(n+1)*(N2/x)]-th resources are resources of the terminal or other terminals, where n is greater than or equal to 0 and less than or equal to x; or
in a case that the second resource granularity is pattern and the pattern is pattern2, in resources to be selected at the second resource granularity, the [n*(pattern2/x)+1]-th to [(n+1)*(pattern2/x)]-th resources are resources of the terminal or other terminals, where n is greater than or equal to 0 and less than or equal to x; where
the second positioning method includes at least one of an RTT positioning method, a multi-RTT positioning method, a TDOA positioning method, and an angle positioning method.

Optionally, in an embodiment, the first resource granularity and/or the second resource granularity is related to an SL PRS configuration, and the SL PRS configuration includes at least one of the following:
a resource pool or BWP or carrier or frequency domain range configuration of the SL PRS; and
data multiplexed with the SL PRS.

Optionally, in an embodiment, in a case that the first resource granularity and/or the second resource granularity is related to the resource pool configuration of the SL PRS:
if the resource pool of the SL PRS is configured as a dedicated resource pool, or if the SL PRS is to be transmitted in a dedicated resource pool, the first resource granularity is a time domain resource size or time-frequency domain resource size of the SL PRS, and the second resource granularity is a time domain resource size or time-frequency domain resource size of the SL PRS; and
if the resource pool of the SL PRS is configured as being multiplexed with SL data, the first resource granularity is one or multiple slot(s), and the second resource granularity is a time domain resource size or time-frequency domain resource size of the SL PRS.

Optionally, in an embodiment, in a case that the first resource granularity and/or the second resource granularity is related to the data multiplexed with the SL PRS:
if the SL PRS is multiplexed with a physical sidelink control channel PSCCH and/or a physical sidelink shared channel PSSCH, the first resource granularity is one or multiple slot(s), and the second resource granularity is a time domain resource size or time-frequency domain resource size of the SL PRS; and
if the SL PRS is multiplexed with a PSFCH, the first resource granularity is one or multiple symbol(s), and the second resource granularity is a time domain resource size or time-frequency domain resource size of the SL PRS.

Optionally, as an embodiment, the sensing resource is determined based on at least one of the following:
the sensing resource is determined based on a first time, and the first time is a predefined, pre-configured, or configured parameter;
the sensing resource starts from a second time, and the second time is a difference between m and the first time; and
the sensing resource ends at m or ends at a third time, and the third time is a difference between m and a fourth time; where
m is a time for performing resource selection by the terminal, or is a start time of the resource selection window, or is a fifth time before the start time of the resource selection window, and the fourth time and the fifth time each are a predefined time.

Optionally, in an embodiment, the first time is related to an SL PRS configuration period.

Optionally, in an embodiment, m, the first time, the second time, the third time, the fourth time, and the fifth time each are a physical time or logical time.

Optionally, in an embodiment, in a case that the first time is related to the SL PRS configuration period, the first time includes any one of the following:
the first time is a first value, and the first value is a maximum value of configured SL PRS periods;
the first time is a maximum value of the first value and Y slots;
the first time is a sum of the first value and Z milliseconds; and
the first time is a sum of the first value and Y slots; where
Y and/or Z is a predefined, pre-configured, or configured value.

Optionally, in an embodiment, the sensing module 801 meets at least one of the following:
a sensing reference signal is determined based on a predefined, pre-configured or configured reference signal parameter;
SL PRS sensing is determined based on a quantity of ports and/or a port number of the SL PRS; and
an SL PRS sensing result is the same as an SL physical sidelink control channel PSCCH, SL physical sidelink shared channel PSSCH, and/or SL demodulation reference signal DMRS sensing result, or the SL PSSCH, SL PSSCH, and/or SL DMRS sensing result is the SL PRS sensing result.

Optionally, in an embodiment, the sensing reference signal is an SL PRS or a PSCCH DMRS.

Optionally, in an embodiment, the apparatus 800 is configured to:
in a case that a first condition is met, perform resource selection on the sidelink SL; where
the first condition includes at least one of the following:
   SL PRS transmission is configured or enabled in a BWP or carrier or frequency domain range;
   SL PRS transmission is configured or enabled for a resource pool; and
   SL PRS-based sensing is configured for the resource pool.

For the apparatus 800 in this embodiment of this application, refer to the processes of the method 200 in the corresponding embodiments of this application, and the units or modules of the apparatus 800 and other operations and/or functions described above are used to implement the corresponding processes in the method 200, with the same or equivalent technical effects achieved. For brevity, details are not repeated herein.

The apparatus for resource selection on sidelink SL in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The apparatus for resource selection on sidelink SL provided in this embodiment of this application is capable of implementing the processes implemented in the method embodiments in FIG. 2 to FIG. 7, with the same technical effects achieved. To avoid repetition, details are not described herein again.

Optionally, as shown in FIG. 9, an embodiment of this application further provides a communication device 900, including a processor 901 and a memory 902. A program or instructions capable of running on the processor 901 are stored in the memory 902. For example, when the communication device 900 is terminal, and when the program or the instructions are executed by the processor 901, the steps of the foregoing embodiments of the method for resource selection on sidelink SL are implemented, with the same technical effects achieved. To avoid repetition, details are not described herein again.

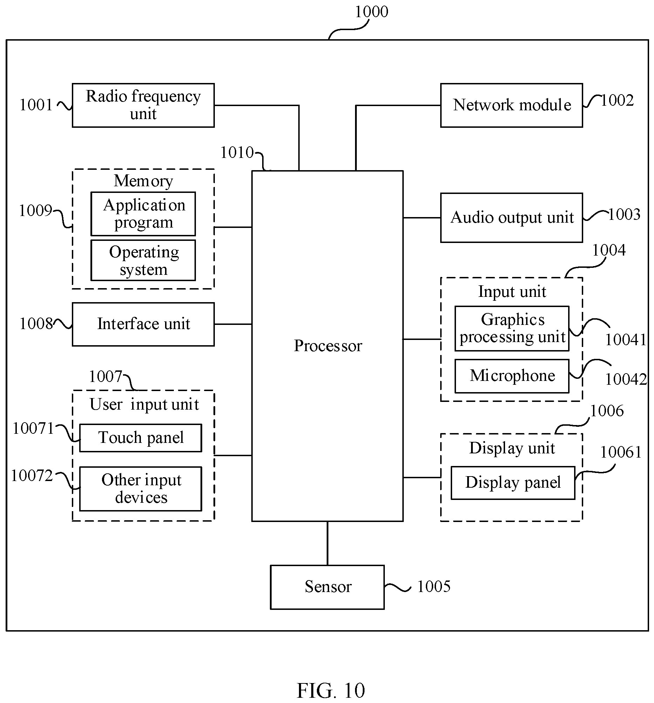

An embodiment of this application further provides a terminal, including a processor and a communication interface. The processor is configured to perform sensing on a sensing resource; based on a sensing result, perform resource exclusion in a resource selection window at a first resource granularity; and perform resource selection in remaining resources of the resource selection window at a second resource granularity, where a selected resource is used for transmitting an SL positioning reference signal PRS. The terminal embodiments correspond to the foregoing terminal-side method embodiments, and the implementation processes and implementations of the foregoing method embodiments can be applied to the terminal embodiments, with the same technical effects achieved. Specifically, FIG. 10 is a schematic diagram of a hardware structure of a terminal for implementing the embodiments of this application.

The terminal 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 10 does not constitute any limitation on the terminal. The terminal may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 may include at least one of a touch panel 10071 and other input devices 10072. The touch panel 10071 is also referred to as a touchscreen. The touch panel 10071 may include two parts: a touch sensing apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, the radio frequency unit 1001 receives downlink data from a network-side device, and then sends the downlink data to the processor 1010 for processing. In addition, the radio frequency unit 1001 may send uplink data to the network-side device. Generally, the radio frequency unit 1001 includes but is not limited to an antenna, an amplifier, a transceiver, a coupler, a low noise amplifier, a duplexer, and the like.

The memory 1009 may be configured to store software programs or instructions and various data. The memory 1009 may include a first storage area for storing a program or instructions and a second storage area for storing data. The first storage area may store an operating system, an application program or instruction required by at least one function (for example, a sound playback function or an image playback function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1009 in the embodiments of this application includes but is not limited to these and any other suitable types of memories.

The processor 1010 may include one or more processing units. Optionally, an application processor and a modem processor may be integrated in the processor 1010. The application processor primarily processes operations involving an operating system, user interfaces, application programs, and the like. The modem processor primarily processes radio communication signals, for example, being a baseband processor. It can be understood that the modem processor may alternatively be not integrated in the processor 1010.

The processor 1010 is configured to perform sensing on a sensing resource; based on a sensing result, perform resource exclusion in a resource selection window at a first resource granularity; and perform resource selection in remaining resources of the resource selection window at a second resource granularity, where a selected resource is used for transmitting an SL positioning reference signal PRS.

In this embodiment of this application, when the terminal selects the SL PRS transmission resource on the SL, because resource sensing can be performed first, unavailable resources can be excluded at the first resource granularity based on the sensing result, and then resource selection is performed at the second resource granularity in the remaining available resources, reliable resources for transmitting the SL PRS can be selected on the SL, thus ensuring effectiveness and reliability of SL PRS transmission.

Optionally, the processor 1010 is further configured to: in a case that a first condition is met, perform, for the terminal, resource selection on the sidelink SL; where
the first condition includes at least one of the following:
SL PRS transmission is configured or enabled in a BWP or carrier or frequency domain range;
SL PRS transmission is configured or enabled for a resource pool; and
SL PRS-based sensing is configured for the resource pool.

The terminal 1000 provided in this embodiment of this application is capable of implementing the processes of the embodiments of the method 200, with the same technical effects achieved. To avoid repetition, details are not described herein again.

An embodiment of this application further provides a readable storage medium, where a program or instructions are stored in the readable storage medium. When the program or the instructions are executed by a processor, the processes of the foregoing embodiments of the method for resource selection on sidelink SL described above can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing method for resource selection on sidelink SL embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing method for resource selection on sidelink SL embodiments, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A method for resource selection on sidelink SL, comprising:
performing, by a terminal, sensing on a sensing resource;
based on a sensing result, performing resource exclusion in a resource selection window at a first resource granularity; and
performing resource selection in remaining resources of the resource selection window at a second resource granularity, wherein a selected resource is used for transmitting an SL positioning reference signal PRS.

2. The method according to claim 1, wherein the first resource granularity is the same as or different from the second resource granularity.

3. The method according to claim 1, wherein the first resource granularity comprises at least one of the following:
an SL PRS pattern (pattern);
M time domain resource elements, wherein the time domain resource element comprises a symbol(s), a slot(s), a microsecond µs, a millisecond ms, or a second s;
N frequency domain resource elements, wherein the frequency domain resource element comprises a comb (comb) unit, a resource block RB(s), a resource element RE(s), or a subchannel;
a frequency domain bandwidth of a resource pool;
a frequency domain bandwidth of a bandwidth part BWP; and
a frequency domain bandwidth of a carrier (carrier).

4. The method according to claim 1, wherein the first resource granularity comprises at least one of the following:
the first resource granularity is a predefined, pre-configured, or configured parameter;
the first resource granularity is determined according to a predefined, pre-configured, or configured rule;
the first resource granularity is related to an SL PRS configuration;
the first resource granularity is related to an SL positioning method; and
the first resource granularity is related to an SL physical sidelink feedback channel PSFCH configuration.

5. The method according to claim 4, wherein the first resource granularity being related to the SL PRS configuration comprises any one of the following:
in a case that the SL PRS configuration is A symbols, the first resource granularity is equal to the A symbols;
in a case that the terminal transmits an SL PRS, the first resource granularity is equal to one or multiple slot(s); and
in a case that SL PRS transmission is supported in a resource pool or BWP or carrier or frequency domain range, the first resource granularity is equal to one or multiple slot(s).

6. The method according to claim 4, wherein the first resource granularity being related to the SL PSFCH configuration comprises:
in a case that the SL PSFCH is configured in a slot, the first resource granularity is equal to 2 or 4 symbols; and
in a case that no SL PSFCH is configured in the slot, the first resource granularity is equal to 0.

7. The method according to claim 4, wherein the first resource granularity being related to the SL positioning method comprises:
in a case that the SL positioning method is configured as a first positioning method, the first resource granularity is M1 time domain resource elements, or the first resource granularity is pattern1 pattern units, or the first resource granularity is N1 frequency domain resource elements; wherein
in a case that the first resource granularity is M time domain resource elements and M is M1, in resources to be selected at the second resource granularity, [n*(M1/x)+1]-th to [(n+1)*(M1/x)]-th resources are resources of the terminal or other terminals, wherein n is greater than or equal to 0 and less than or equal to x; or
in a case that the first resource granularity is N frequency domain resource elements and N is N1, in resources to be selected at the second resource granularity, [n*(N1/x)+1]-th to [(n+1)*(N1/x)]-th resources are resources of the terminal or other terminals, wherein n is greater than or equal to 0 and less than or equal to x; or
in a case that the first resource granularity is pattern and the pattern is pattern1, in resources to be selected at the second resource granularity, [n*(pattern1/x)+1]-th to [(n+1)*(pattern1/x)]-th resources are resources of the terminal or other terminals, wherein n is greater than or equal to 0 and less than or equal to x; wherein
the first positioning method comprises at least one of a round-trip time RTT positioning method, a multi-RTT positioning method, a time difference of arrival TDOA positioning method, and an angle positioning method.

8. The method according to claim 1, wherein the second resource granularity comprises at least one of the following:
an SL PRS pattern;
P time domain resource elements, wherein the time domain resource element comprises a symbol, a slot, a microsecond, a millisecond, or a second;
Q frequency domain resource elements, wherein the frequency domain resource element comprises a comb unit, an RB(s), a RE(s), or a subchannel;
a frequency domain bandwidth of a resource pool;
a frequency domain bandwidth of a BWP; and
a frequency domain bandwidth of a carrier (carrier).

9. The method according to claim 1, wherein the second resource granularity comprises at least one of the following:
the second resource granularity is a predefined, pre-configured, or configured parameter;
the second resource granularity is determined according to a predefined, pre-configured, or configured rule;
the second resource granularity is related to an SL PRS configuration; and
the second resource granularity is related to an SL positioning method.

10. The method according to claim 9, wherein the second resource granularity being related to the SL PRS configuration comprises:
in a case that the SL PRS configuration is B symbols, the second resource granularity is equal to the B symbols.

11. The method according to claim 9, wherein the second resource granularity being related to the SL positioning method comprises:
in a case that the SL positioning method is configured as a second positioning method, the second resource granularity is M2 time domain resource elements, or the second resource granularity is pattern2 pattern units, or the second resource granularity is N2 frequency domain resource elements; wherein
in a case that the second resource granularity is P time domain resource elements and P is M2, in resources to be selected at the second resource granularity, [n*(M2/x)+1]-th to [(n+1)*(M2/x)]-th resources are resources of the terminal or other terminals, wherein n is greater than or equal to 0 and less than or equal to x; or
in a case that the second resource granularity is Q frequency domain resource elements and Q is N2, in resources to be selected at the second resource granularity, [n*(N2/x)+1]-th to [(n+1)*(N2/x)]-th resources are resources of the terminal or other terminals, wherein n is greater than or equal to 0 and less than or equal to x; or
in a case that the second resource granularity is pattern and the pattern is pattern2, in resources to be selected at the second resource granularity, [n*(pattern2/x)+1]-th to [(n+1)*(pattern2/x)]-th resources are resources of the terminal or other terminals, wherein n is greater than or equal to 0 and less than or equal to x; wherein
the second positioning method comprises at least one of an RTT positioning method, a multi-RTT positioning method, a TDOA positioning method, and an angle positioning method.

12. The method according to claim 1, wherein the first resource granularity and/or the second resource granularity is related to an SL PRS configuration, and the SL PRS configuration comprises at least one of the following:
a resource pool or BWP or carrier or frequency domain range configuration of the SL PRS; and
data multiplexed with the SL PRS.

13. The method according to claim 12, wherein in a case that the first resource granularity and/or the second resource granularity is related to the resource pool configuration of the SL PRS:
if the resource pool of the SL PRS is configured as a dedicated resource pool, or if the SL PRS is to be transmitted in a dedicated resource pool, the first resource granularity is a time domain resource size or time-frequency domain resource size of the SL PRS, and the second resource granularity is a time domain resource size or time-frequency domain resource size of the SL PRS; and
if the resource pool of the SL PRS is configured as being multiplexed with SL data, the first resource granularity is one or multiple slot(s), and the second resource granularity is a time domain resource size or time-frequency domain resource size of the SL PRS.

14. The method according to claim 12, wherein in a case that the first resource granularity and/or the second resource granularity is related to the data multiplexed with the SL PRS:
if the SL PRS is multiplexed with a physical sidelink control channel PSCCH and/or a physical sidelink shared channel PSSCH, the first resource granularity is one or multiple slot(s), and the second resource granularity is a time domain resource size or time-frequency domain resource size of the SL PRS; and
if the SL PRS is multiplexed with a PSFCH, the first resource granularity is one or multiple symbol(s), and the second resource granularity is a time domain resource size or time-frequency domain resource size of the SL PRS.

15. The method according to claim 1, wherein the sensing resource is determined based on at least one of the following:
the sensing resource is determined based on a first time, and the first time is a predefined, pre-configured, or configured parameter;
the sensing resource starts from a second time, and the second time is a difference between m and the first time; and
the sensing resource ends at m or ends at a third time, and the third time is a difference between m and a fourth time; wherein
m is a time for performing resource selection by the terminal, or is a start time of the resource selection window, or is a fifth time before the start time of the resource selection window, and the fourth time and the fifth time each are a predefined time.

16. The method according to claim 15, wherein the first time is related to an SL PRS configuration period.

17. The method according to claim 16, wherein m, the first time, the second time, the third time, the fourth time, and the fifth time each are a physical time or logical time.

18. The method according to claim 16, wherein in a case that the first time is related to the SL PRS configuration period, the first time comprises any one of the following:
the first time is a first value, and the first value is a maximum value of configured SL PRS periods;
the first time is a maximum value of the first value and Y slots;
the first time is a sum of the first value and Z milliseconds; and
the first time is a sum of the first value and Y slots; wherein
Y and/or Z is a predefined, pre-configured, or configured value.

19. The method according to claim 1, wherein the performing, by a terminal, sensing on a sensing resource meets at least one of the following:
a sensing reference signal is determined based on a predefined, pre-configured or configured reference signal parameter;
SL PRS sensing is determined based on a quantity of ports and/or a port number of the SL PRS; and
an SL PRS sensing result is the same as an SL physical sidelink control channel PSCCH, SL physical sidelink shared channel PSSCH, and/or SL demodulation reference signal DMRS sensing result, or the SL PSSCH, SL PSSCH, and/or SL DMRS sensing result is the SL PRS sensing result.

20. The method according to claim 19, wherein the sensing reference signal is an SL PRS or a PSCCH DMRS.

21. The method according to claim 1, wherein the performing, by the terminal, resource selection on the sidelink SL comprises:
in a case that a first condition is met, performing, by the terminal, resource selection on the sidelink SL; wherein
the first condition comprises at least one of the following:
SL PRS transmission is configured or enabled in a BWP or carrier or frequency domain range;
SL PRS transmission is configured or enabled for a resource pool; and
SL PRS-based sensing is configured for the resource pool.

22. An apparatus for resource selection on sidelink SL, comprising:
a sensing module, configured to perform sensing on a sensing resource;
a resource exclusion module, configured to: based on a sensing result, perform resource exclusion in a resource selection window at a first resource granularity; and
a resource selection module, configured to perform resource selection in remaining resources of the resource selection window at a second resource granularity, wherein a selected resource is used for transmitting an SL positioning reference signal PRS.

23. The apparatus according to claim 22, wherein the first resource granularity is the same as or different from the second resource granularity.

24. The apparatus according to claim 22, wherein the first resource granularity comprises at least one of the following:
an SL PRS pattern (pattern);
M time domain resource elements, wherein the time domain resource element comprises a symbol(s), a slot(s), a microsecond µs, a millisecond ms, or a second s;
N frequency domain resource elements, wherein the frequency domain resource element comprises a comb (comb) unit, a resource block RB(s), a resource element RE(s), or a subchannel;
a frequency domain bandwidth of a resource pool;
a frequency domain bandwidth of a bandwidth part BWP; and
a frequency domain bandwidth of a carrier (carrier).

25. The apparatus according to claim 22, wherein the first resource granularity comprises at least one of the following:
the first resource granularity is a predefined, pre-configured, or configured parameter;
the first resource granularity is determined according to a predefined, pre-configured, or configured rule;
the first resource granularity is related to an SL PRS configuration;
the first resource granularity is related to an SL positioning method; and
the first resource granularity is related to an SL physical sidelink feedback channel PSFCH configuration.

26. The apparatus according to claim 25, wherein the first resource granularity being related to the SL PRS configuration comprises any one of the following:
in a case that the SL PRS configuration is A symbols, the first resource granularity is equal to the A symbols;
in a case that the terminal transmits an SL PRS, the first resource granularity is equal to one or multiple slot(s); and
in a case that SL PRS transmission is supported in a resource pool or BWP or carrier or frequency domain range, the first resource granularity is equal to one or multiple slot(s).

27. The apparatus according to claim 25, wherein the first resource granularity being related to the SL PSFCH configuration comprises:
in a case that the SL PSFCH is configured in a slot, the first resource granularity is equal to 2 or 4 symbols; and
in a case that no SL PSFCH is configured in the slot, the first resource granularity is equal to 0.

28. The apparatus according to claim 25, wherein the first resource granularity being related to the SL positioning method comprises:
in a case that the SL positioning method is configured as a first positioning method, the first resource granularity is M1 time domain resource elements, or the first resource granularity is pattern1 pattern units, or the first resource granularity is N1 frequency domain resource elements; wherein
in a case that the first resource granularity is M time domain resource elements and M is M1, in resources to be selected at the second resource granularity, [n*(M1/x)+1]-th to [(n+1)*(M1/x)]-th resources are resources of the terminal or other terminals, wherein n is greater than or equal to 0 and less than or equal to x; or
in a case that the first resource granularity is N frequency domain resource elements and N is N1, in resources to be selected at the second resource granularity, [n*(N1/x)+1]-th to [(n+1)*(N1/x)]-th resources are resources of the terminal or other terminals, wherein n is greater than or equal to 0 and less than or equal to x; or
in a case that the first resource granularity is pattern and the pattern is pattern1, in resources to be selected at the second resource granularity, [n*(pattern1/x)+1]-th to [(n+1)*(pattern1/x)]-th resources are resources of the terminal or other terminals, wherein n is greater than or equal to 0 and less than or equal to x; wherein
the first positioning method comprises at least one of a round-trip time RTT positioning method, a multi-RTT positioning method, a time difference of arrival TDOA positioning method, and an angle positioning method.

29. The apparatus according to claim 22, wherein the second resource granularity comprises at least one of the following:
an SL PRS pattern;
P time domain resource elements, wherein the time domain resource element comprises a symbol, a slot, a microsecond, a millisecond, or a second;
Q frequency domain resource elements, wherein the frequency domain resource element comprises a comb unit, an RB(s), a RE(s), or a subchannel;
a frequency domain bandwidth of a resource pool;
a frequency domain bandwidth of a BWP; and
a frequency domain bandwidth of a carrier (carrier).

30. The apparatus according to claim 22, wherein the second resource granularity comprises at least one of the following:
the second resource granularity is a predefined, pre-configured, or configured parameter;
the second resource granularity is determined according to a predefined, pre-configured, or configured rule;
the second resource granularity is related to an SL PRS configuration; and
the second resource granularity is related to an SL positioning method.

31. The apparatus according to claim 30, wherein the second resource granularity being related to the SL PRS configuration comprises:
in a case that the SL PRS configuration is B symbols, the second resource granularity is equal to the B symbols.

32. The apparatus according to claim 30, wherein the second resource granularity being related to the SL positioning method comprises:
in a case that the SL positioning method is configured as a second positioning method, the second resource granularity is M2 time domain resource elements, or the second resource granularity is pattern2 pattern units, or the second resource granularity is N2 frequency domain resource elements; wherein
in a case that the second resource granularity is P time domain resource elements and P is M2, in resources to be selected at the second resource granularity, [n*(M2/x)+1]-th to [(n+1)*(M2/x)]-th resources are resources of the terminal or other terminals, wherein n is greater than or equal to 0 and less than or equal to x; or
in a case that the second resource granularity is Q frequency domain resource elements and Q is N2, in resources to be selected at the second resource granularity, [n*(N2/x)+1]-th to [(n+1)*(N2/x)]-th resources are resources of the terminal or other terminals, wherein n is greater than or equal to 0 and less than or equal to x; or
in a case that the second resource granularity is pattern and the pattern is pattern2, in resources to be selected at the second resource granularity, [n*(pattern2/x)+1]-th to [(n+1)*(pattern2/x)]-th resources are resources of the terminal or other terminals, wherein n is greater than or equal to 0 and less than or equal to x; wherein
the second positioning method comprises at least one of an RTT positioning method, a multi-RTT positioning method, a TDOA positioning method, and an angle positioning method.

33. The apparatus according to claim 22, wherein the first resource granularity and/or the second resource granularity is related to an SL PRS configuration, and the SL PRS configuration comprises at least one of the following:
a resource pool or BWP or carrier or frequency domain range configuration of the SL PRS; and
data multiplexed with the SL PRS.

34. The apparatus according to claim 33, wherein in a case that the first resource granularity and/or the second resource granularity is related to the resource pool configuration of the SL PRS:
if the resource pool of the SL PRS is configured as a dedicated resource pool, or if the SL PRS is to be transmitted in a dedicated resource pool, the first resource granularity is a time domain resource size or time-frequency domain resource size of the SL PRS, and the second resource granularity is a time domain resource size or time-frequency domain resource size of the SL PRS; and
if the resource pool of the SL PRS is configured as being multiplexed with SL data, the first resource granularity is one or multiple slot(s), and the second resource granularity is a time domain resource size or time-frequency domain resource size of the SL PRS; and
in a case that the first resource granularity and/or the second resource granularity is related to the data multiplexed with the SL PRS:
if the SL PRS is multiplexed with a physical sidelink control channel PSCCH and/or a physical sidelink shared channel PSSCH, the first resource granularity is one or multiple slot(s), and the second resource granularity is a time domain resource size or time-frequency domain resource size of the SL PRS; and
if the SL PRS is multiplexed with a PSFCH, the first resource granularity is one or multiple symbol(s), and the second resource granularity is a time domain resource size or time-frequency domain resource size of the SL PRS.

35. The apparatus according to claim 22, wherein the sensing resource is determined based on at least one of the following:
the sensing resource is determined based on a first time, wherein the first time is a predefined, pre-configured, or configured parameter, and the first time is related to an SL PRS configuration period;
the sensing resource starts from a second time, and the second time is a difference between m and the first time; and
the sensing resource ends at m or ends at a third time, and the third time is a difference between m and a fourth time; wherein
m is a time for performing resource selection by the terminal, or is a start time of the resource selection window, or is a fifth time before the start time of the resource selection window, and the fourth time and the fifth time each are a predefined time.

36. The apparatus according to claim 35, wherein in a case that the first time is related to the SL PRS configuration period, the first time comprises any one of the following:
the first time is a first value, and the first value is a maximum value of configured SL PRS periods;
the first time is a maximum value of the first value and Y slots;
the first time is a sum of the first value and Z milliseconds; and
the first time is a sum of the first value and Y slots; wherein
Y and/or Z is a predefined, pre-configured, or configured value.

37. The apparatus according to claim 22, wherein the sensing module meets at least one of the following:
a sensing reference signal is determined based on a predefined, pre-configured or configured reference signal parameter, wherein the sensing reference signal is an SL PRS or a PSCCH DMRS;
SL PRS sensing is determined based on a quantity of ports and/or a port number of the SL PRS; and
an SL PRS sensing result is the same as an SL physical sidelink control channel PSCCH, SL physical sidelink shared channel PSSCH, and/or SL demodulation reference signal DMRS sensing result, or the SL PSSCH, SL PSSCH, and/or SL DMRS sensing result is the SL PRS sensing result.

38. The apparatus according to claim 22, wherein the apparatus is configured to:
in a case that a first condition is met, perform resource selection on the sidelink SL; wherein
the first condition comprises at least one of the following:
SL PRS transmission is configured or enabled in a BWP or carrier or frequency domain range;
SL PRS transmission is configured or enabled for a resource pool; and
SL PRS-based sensing is configured for the resource pool.

39. A terminal, comprising a processor and a memory, wherein the memory stores a program or instructions capable of running on the processor; and when the program or the instructions are executed by the processor, the steps of the method for resource selection on sidelink SL according to any one of claims 1 to 21 are implemented.

40. A readable storage medium, wherein the readable storage medium stores a program or instructions, and when the program or the instructions are executed by a processor, the steps of the method for resource selection on sidelink SL according to any one of claims 1 to 21 are implemented.
